## Europäisches Patentamt
## European Patent Office
## Office européen des brevets

(19)

(11) Numéro de publication: **0 186 563**
**B1**

(12) **FASCICULE DE BREVET EUROPEEN**

(51) Int. Cl.⁴: **G 01 N 23/18, G 01 N 23/04**

(45) Date de publication du fascicule du brevet:
**22.03.89**

(21) Numéro de dépôt: **85402399.1**

(22) Date de dépôt: **04.12.85**

(54) Indicateur de sensibilité pour la détection de défauts par contrôle radiologique.

(30) Priorité: **06.12.84 FR 8418591**

(43) Date de publication de la demande:
**02.07.86 Bulletin 86/27**

(45) Mention de la délivrance du brevet:
**22.03.89 Bulletin 89/12**

(84) Etats contractants désignés:
**DE FR GB IT**

(56) Documents cités:
**DE-C- 367 710**

**R. C. McMASTER: NONDESTRUCTIVE TESTING HANDBOOK, vol. 1, 1959, pages 20.36-20.38, section 20 "Film Radiography", paragraphe "Penetrameters", The Ronald Press Company, New York, US PHOTOGRAPHIC SCIENCE AND ENGINEERING, vol. 6, no. 5, septembre-octobre 1962, pages 289-293; H.S. DeBEN: "Perception of small detail in industrial radiographs" MEDICAL PHYSICS, vol. 3, no. 1, janvier-février 1976, pages 19-25, Am. Assoc. Phys. Med., New York, US; A.F. JACOBSON et al.: "Test cassette for measuring peak tube potential of diagnostic x-ray machines"**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Mangenet, Gérard Yves, 13, Rue H. de Balzac Epinay Sous Senart, F-91800 Brunoy (FR)**
Inventeur: **Perruc, Jean, 175, rue de Paris, F-92220 Bagneux (FR)**
Inventeur: **Vaerman, Jean Fernand, 2, allée des Perce-neige, F-77240 Vert Saint Denis (FR)**

(74) Mandataire: **Moinat, François, S.N.E.C.M.A. Service des Brevets Boîte Postale 81, F-91003 Evry Cédex (FR)**

# Description

L'invention concerne un indicateur de sensibilité pour la détection de défauts par contrôle radiologique. Il est connu par le document DE-C-367 710 de déterminer, par rayonnement X, l'épaisseur ou la densité d'une pièce par comparaison avec une pièce étalon de densité ou d'épaisseur connue formée de deux cales étagées superposées. Toutefois, ce type de contrôle ne permet pas en lui-même de détecter les défauts internes de la pièce à mesurer et encore moins de quantifier la valeur de ces défauts.

Il est courant dans l'industrie de faire appel au contrôle radiologique pour déceler dans une pièce les défauts formés lors de l'élaboration du matériau, de l'assemblage d'éléments de pièce ou de son fonctionnement. Il s'agit souvent d'un manque de matière tel que celui produit par des soufflures, par une zone non soudée ou par des criques. Dans le cas de la radiographie sur film, ces défauts donnent sur le radiogramme des zones plus foncées dénonçant une absorption plus faible du rayonnement et, par conséquent, un manque de matière. Il peut s'agir aussi de la présence de matières plus denses ou moins denses qui donnent sur le radiogramme des zones respectivement plus claires et plus foncées dénonçant une absorption différente du rayonnement. Cette méthode ne donne cependant pas une image de tous les défauts internes et au-dessous d'une certaine taille, par rapport à l'épaisseur de la pièce, ceux-ci ne sont pas détectables sur le radiogramme. Il est donc nécessaire de connaître, pour une application donnée, la sensibilité de détection de la technique radiographique utilisée. La sensibilité se définit comme le rapport de la dimension minimale des défauts, mesurée parallèlement au rayonnement, à l'épaisseur de la pièce traversée par celui-ci. Elle est mesurée usuellement par des indicateurs de qualité d'images. Ces indicateurs sont de deux types: le type à trous et le type à fils.

Les indicateurs du type à trous sont constitués d'une pièce métallique présentant une ou plusieurs plages à faces parallèles et d'épaisseur donnée comportant chacune un ou plusieurs trous axiaux perpendiculaires aux faces et de diamètre souvent égal à l'épaisseur de la plage. Ils sont assez représentatifs des défauts volumiques tels que les soufflures (système français AFNOR par exemple).

Les indicateurs du type à fils sont formés d'un ou plusieurs fils de diamètre donné de longueur relativement grande par rapport à leur diamètre (système allemand DIN et anglais BS).

Les indicateurs de l'un ou l'autre type sont placés sur la pièce à contrôler et l'on détermine le trou, le fil du plus petit diamètre visible sur le radiogramme. On en déduit la sensibilité par la formule

$$S\% = \frac{\varnothing}{E} \times 100,$$

dans laquelle $\varnothing$ est le diamètre du trou du fil et E l'épaisseur de la pièce. Plus la sensibilité est faible plus la qualité de l'image est bonne.

Ces indicateurs, bien que d'emploi facile, présentent de graves inconvénients:

— ils sont inutilisables pour le contrôle des pièces de faible épaisseur, les trous, les fils devant alors avoir un diamètre trop faible;

— ils sont peu sensibles aux variations des paramètres de contrôle: dimensions de la source de rayonnement, distance source pièce, épaisseur de la pièce, nature du matériau, énergie du rayonnement etc. . . Ils peuvent donner une même valeur de la sensibilité pour des variations importantes des paramètres;

— ils ne suivent pas de manière continue les évolutions de sensibilité de détection;

— ils donnent des valeurs de sensibilité non significatives pour les défauts plans tels que les criques, les manques de liaison d'une soudure. . .

L'invention a pour objet un indicateur de sensibilité simulant un défaut plan permettant son utilisation pour les faibles épaisseurs, donnant une réponse élevée aux variations des paramètres de contrôle, permettant une quantification continue du niveau de sensibilité et selon une des formes de réalisation, peu sensible au positionnement par rapport à la source de rayonnement. Contrairement aux indicateurs de qualité d'image, cet indicateur de sensibilité n'est pas placé sur la pièce. Sa matière et son épaisseur doivent correspondre à ceux de la pièce à contrôler.

L'indicateur de sensibilité, selon l'invention, est remarquable en ce qu'il est constitué d'au moins deux pièces semblables et comportant des parties d'épaisseur variable, fixées sur un support d'épaisseur complémentaire variant en sens inverse de telle sorte que leurs faces supérieure et inférieure soient parallèles entre elles. Les deux pièces sont disposées côte à côte et leurs côtés latéraux voisins et parallèles en contact l'un contre l'autre simulent un défaut s'étendant dans un plan et ci-après désigné par défaut plan. Ces côtés sont perpendiculaires aux faces supérieures des pièces et inférieures du support, elles-mêmes opposées aux faces, en contact, des pièces et du support, le rayonnement pénétrant l'indicateur perpendiculairement à la face supérieure des pièces précitées.

Les explications et figures données ci-après, à titre d'exemples, permettront de comprendre comment l'invention peut être réalisée.

La figure 1 représente, vue de dessus, une forme de réalisation d'un indicateur de sensibilité conforme à l'invention.

La figure 2 est une vue en coupe, selon II–II, de la figure 1.

La figure 3 est une vue de dessus d'une deuxième forme de réalisation d'un indicateur de sensibilité partiellement démonté, conforme à l'invention.

La figure 4 est une vue en coupe selon IV–IV de la figure 1.

La figure 5 est une vue en coupe selon V–V de la figure 3.

La figure 6 est une vue en coupe selon VI–VI de la figure 3.

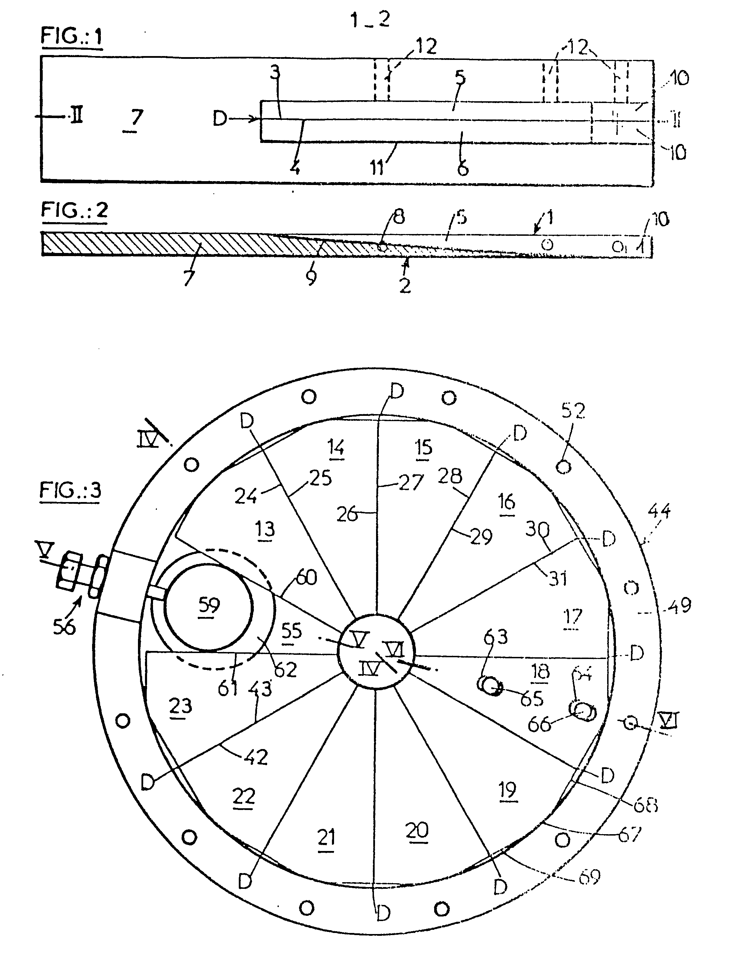

La figure 1 représente, vue de dessus, une forme de réalisation d'un indicateur de sensibilité conforme à l'invention. Cet indicateur simule un défaut plan D par manque de métal s'étendant dans un plan parallèle au rayonnement. Le plan du défaut est défini perpendiculairement aux faces d'entrée 1 et de sortie 2 du rayonnement dans la pièce à contrôler et, plus particulièrement dans l'indicateur. Cette disposition particulière a été choisie pour correspondre aux conditions de détection d'un défaut plan de faible largeur. La largeur est définie entre les deux côtés voisins 3, 4 et parallèles de deux pièces 5, 6, d'épaisseur variable, semblables. Les variations d'épaisseur permettent de simuler la profondeur d'un défaut par rapport à l'épaisseur totale comprise entre les faces d'entrée 1 et de sortie 2. Les pièces 5, 6 sont maintenues en contact par une de leurs faces 8 sur un support 7 de forme complémentaire dont l'épaisseur varie en sens inverse de celle des pièces 5, 6. Les faces des pièces 5, 6 d'épaisseur variable et du support 7, opposées à leurs faces en contact 8, 9 forment au moins partiellement les faces d'entrée 1 et de sortie 2 et sont perpendiculaires aux plans des deux côtés voisins 3, 4 des pièces 5, 6 formant le défaut plan.

Selon la forme préférée représentée, les pièces 5, 6 d'épaisseur variable sont constituées de deux prismes droits identiques dont les bases comportent un prolongement parallélépipédique 10 d'épaisseur égale à celle de l'indicateur, épaisseur définie entre les faces 1 et 2, remplissant une partie du logement 11. Les deux pièces 5, 6 prismatiques sont maintenues par leurs faces obliques 8 dans un logement 11 de forme et d'épaisseur complémentaires, prévu dans une partie du support 7. Les faces 1, 2 perpendiculaires aux bases des pièces prismatiques 5, 6 et du logement prismatique du support 7 sont parallèles entre elles et forment les faces d'entrée et de sortie du rayonnement. Des moyens de fixation et de serrage 12 sont prévus sur au moins un côté du support, pour maintenir en contact les côtés latéraux voisins 3, 4 des pièces prismatiques 5, 6. La forme prismatique des pièces 5, 6 permet d'obtenir une variation continue de l'épaisseur du défaut.

Selon une forme de réalisation non représentée, les pièces 5, 6 ont une épaisseur variant, de manière discrète, par paliers. Le support 7 présente une épaisseur complémentaire variant en sens inverse de celles des pièces 5, 6, les surfaces 1, 2 des pièces 5, 6 et du support 7, non en contact, étant parallèles entre elles et perpendiculaires aux côtés 3, 4 des pièces 5, 6 formant le défaut plan.

Les figures 3 et suivantes représentent une autre forme de réalisation d'indicateur de sensibilité conforme à l'invention. Cette réalisation a été conçue pour être peu sensible au positionnement par rapport à la source de rayonnement. En effet, si un défaut plan unique n'est pas à l'aplomb de la source de rayonnement, il laissera une trace plus ou moins visible sur le radiogramme suivant qu'il est disposé plus ou moins radialement par rapport à la source. En réalisant un indicateur avec plusieurs défauts répartis en étoile, on est sûr qu'au moins un de ces défauts sera bien placé par rapport à la source. Ce défaut donnera sur le radiogramme une trace plus grande que les autres qui sera utilisée pour la détermination de la sensibilité.

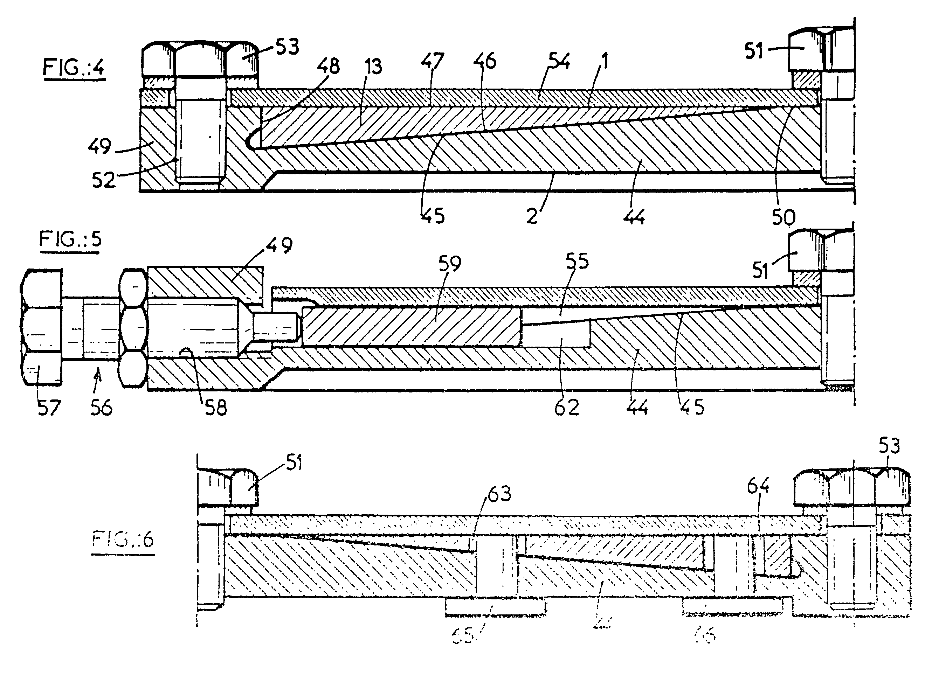

L'exemple d'indicateur représenté comporte dix défauts plans formant les rayons d'un indicateur circulaire. Chaque défaut D est défini par les faces radiales voisines 24, 25... 42, 43 de deux pièces 13, 14... 22, 23 en forme de secteur circulaire, d'épaisseur variable, disposées côte à côte sur un support 44 de forme circulaire et d'épaisseur précédents, les pièces secteurs 13 à 23 ont dans le plan vertical une section en forme de triangle rectangle, un des angles aigus du triangle étant dirigé vers la pointe du secteur circulaire, c'est-à-dire vers le centre de l'indicateur. La forme des pièces est donc pyramidale, à base rectangulaire, un des côtés étant perpendiculaire aux génératrices de ladite base. Cette configuration ressort de la figure 4 qui est une coupe au travers d'une pièce pyramidale 13 et du support 44.

Afin de permettre un positionnement convenable des pièces dans le support, ce dernier présente une face conique circulaire 45, sur laquelle sont fixées les pièces secteurs pyramidales. La face 46 des pièces secteurs en contact avec la face conique 45 du support 44 opposée au côté 47 perpendiculaire à la base 48, est une surface conique de caractéristiques identiques à ou voisines de la face conique 45 du support 44.

Le support 44 porte à sa périphérie un rebord 49 formant avec la face conique un logement dans lequel seront maintenues les pièces secteurs 13 à 23. Le centre du support forme une partie circulaire plane 50 traversée axialement par un trou taraudé destiné à recevoir un moyen de serrage 51. Le rebord 49 porte, dans le plan de l'indicateur, des trous taraudés 52 destinés à recevoir des moyens de serrage 53. Les moyens de serrage 51 et 53 coopèrent avec une plaque 54 pour maintenir serrées, sur le support 44, les pièces secteurs 13 à 23.

Les pièces secteurs pyramidales n'occupent pas entièrement le logement formé par la paroi conique et le rebord du support et laissent un secteur 55 libre. Ce secteur reçoit un organe de serrage radial 56 représenté à plus grande échelle figure 5 et constitué d'une vis 57 coopérant avec le filetage d'un trou 58 traversant radialement le rebord 49 du support 44. L'extrémité de la vis, débouchant dans le secteur 55, coopère avec la périphérie d'un galet cylindrique plat 59 qui vient forcer contre les faces radiales libres 60, 61 des première et dernière pièces secteurs 13 et 23 et serrer ainsi de proche en proche les pièces secteurs les unes contre les autres. Afin de permettre le libre déplacement du galet sous l'action de la vis 57, un logement cylindrique 62 de diamètre supérieur à celui du galet 59 est prévu dans la face 45 du support 44.

Afin d'assurer un auto-positionnement correct des différentes pièces pendant le serrage, la pièce secteur pyramidale 18 diamétralement opposée à l'organe de serrage radial 56 porte, selon son axe passant par l'organe 56, des boutonnières oblongues 63, 64 coopérant avec des pions 65, 66 fixés dans le support 44.

Selon l'exemple de réalisation représenté figure 3, les frottements entre la partie concave du rebord 49 et la base cylindrique des pièces secteurs pyramidales 13 à 23 sont diminués de manière significative en ne conservant qu'une partie centrale 67 cylindrique de faible largeur raccordant deux parties planes symétriques 68 et 69. Ces parties et les parties planes correspondantes des pièces voisines forment des plans dont la distance au centre du support est inférieure au rayon de la partie concave du rebord 49. Outre la diminution du frottement, ceci permet un auto-positionnement correct des pièces 13 à 23.

La largeur des défauts dans les indicateurs conformes à l'invention est fixée par l'état de surface des côtés latéraux des pièces d'épaisseur variable et par leur serrage. Les défauts ainsi simulés sont particulièrement fins et ne pourraient pas être obtenus par les indicateurs connus.

Toutefois des défauts de plus grande largeur peuvent être obtenus par l'interposition entre les côtés latéraux formant le défaut, de cales étalonnées.

On peut également augmenter l'épaisseur de l'indicateur en le plaçant sur une plaque de même matière afin de permettre son utilisation pour des pièces de plus forte épaisseur.

Enfin il est évident que l'invention ne se limite pas aux formes de réalisation représentées mais quelle englobe tous les équivalents à la portée de l'homme de métier.

**Revendications**

1. Indicateur de sensibilité pour la détection de défauts par contrôle radiologique par rayonnement X constitué d'au moins deux pièces (5, 6; 13 à 23) semblables et comportant des parties d'épaisseur variable, fixées sur un support (7; 44) d'épaisseur complémentaire, variant en sens inverse de telle sorte que leurs faces supérieures et inférieures (1, 2) soient parallèles entre elles, caractérisé en ce que les deux pièces (5, 6; 13 à 23) sont disposées côte à côte et leurs côtés latéraux voisins et parallèles (3, 4; 24, 25... 42, 43) en contact l'un contre l'autre forment un défaut s'étendant dans un plan et ci-après désigné par défaut plan (D), lesdits côtés latéraux (3, 4; 24, 25... 42, 43) étant perpendiculaires aux faces supérieures (1) des pièces (5, 6; 13 à 23) et inférieure (2) du support (7; 44), elles-mêmes opposées aux faces en contact (8, 9; 45, 46), des pièces (5, 6; 13 à 23) et du support (7; 44), le rayonnement pénétrant l'indicateur perpendiculairement à la face supérieure (1) des pièces (5, 6; 13 à 23).

2. Indicateur selon la revendication 1, caractérisé en ce que les pièces (5, 6) d'épaisseur variable sont des prismes droits et sont logées côte à côte au moins partiellement dans un logement (11) du support (7), de forme complémentaire, dans lequel deux (3, 4) de leurs côtés latéraux voisins forment le défaut plan (D), les faces (1, 2) perpendiculaires aux bases des pièces prismatiques (5, 6) et du logement prismatique (11) du support (7) sont parallèles entre elles et forment les faces d'entrée et de sortie du rayonnement.

3. Indicateur selon la revendication 2, caractérisé en ce que le support (7) comporte des moyens de serrage (12) pour maintenir les pièces prismatiques (5, 6) l'une contre l'autre.

4. Indicateur selon la revendication 1, caractérisée en ce que les pièces (13 à 23) d'épaisseur variable sont des secteurs de forme approximativement pyramidale disposées côte à côte sur un support circulaire (44) dont une face (45) est en forme de tronc de cône circulaire, la face des pièces (13 à 23), supportée par la face en forme de tronc de cône étant une surface conique de caractéristiques identiques ou voisines, les faces latérales (24, 25–42, 43) des pièces secteurs voisines étant maintenues en contact par des moyens de serrage (56).

5. Indicateur selon la revendication 4, caractérisé en ce que le support circulaire (44) comporte un rebord (49) formant avec la face tronconique (45) un logement dans lequel sont maintenues les pièces secteurs (13 à 23).

6. Indicateur selon la revendication 5, caractérisé en ce qu'une partie du logement restée libre (55) reçoit un organe de serrage radial (56) des pièces secteurs (13 à 23).

7. Indicateur selon la revendication 6, caractérisé en ce que l'organe de serrage radial (56) comporte une vis (57) coopérant avec un trou fileté (58) traversant radialement le rebord (49) du support (44) pour pousser un galet (59), prévu dans la partie de logement restée libre (55), contre les faces latérales libres (60, 61) des première et dernière pièces secteurs (13, 23).

8. Indicateur selon la revendication 7, caractérisé en ce qu'une pièce secteur (18) diamètralement opposée à l'organe de serrage radial (56) comporte, selon son axe passant par l'organe de serrage (56), des boutonnières (63, 64) coopérant avec des pions (65, 66) fixés dans le support (44).

**Patentansprüche**

1. Empfindlichkeitsanzeiger für die Fehlererfassung durch radiologische Prüfung mittels Röntgenstrahlung, der aus wenigstens zwei ähnlichen Stücken (5, 6; 13 bis 23) mit Teilen variabler Dicke besteht, die auf einem Träger (7; 44) befestigt sind, der eine komplementäre, in entgegengesetzter Richtung variierende Dicke aufweist, so dass ihre Ober- und Unterseiten (1, 2) zueinander parallel sind, dadurch gekennzeichnet, dass die beiden Stücke (5, 6; 13 bis 23) Seite an Seite angeordnet sind und ihre aneinandergrenzenden und parallelen, einander berührenden Seitenflächen (3, 4; 24, 25... 42, 43) einen Fehler bilden, der sich in einer im folgenden als Fehlerebene (D) bezeichneten Ebene erstreckt, wobei die genannten Seitenflächen (3, 4; 24, 25... 42, 43) zu der Oberseite (1) der Stücke (5, 6; 13 bis 23) und der Unterseite (2) des Trägers (7; 44) senkrecht sind, die selbst den einander berührenden Flächen (8, 9; 45, 46) der Stücke (5, 6; 13 bis 23) und des Trägers (7; 44) entgegengesetzt sind, und dass die Strahlung in den Anzeiger senkrecht zu der Oberseite (1) der Stücke (5, 6; 13 bis 23) eindringt.

2. Anzeiger nach Anspruch 1, dadurch gekennzeichnet, dass die Stücke (5, 6) mit variabler Dicke gerade Prismen sind und Seite an Seite zumindest teilweise in einer Aufnahme (11) des komplementär geformten Trägers (7) aufgenommen sind, in der zwei (3, 4) ihrer aneinandergrenzenden Seitenflächen die Fehlerebene (D), bilden, wobei die zu den Basen der prismatischen Stücke (5, 6) und der prismatischen Aufnahme (11) des Trägers (7) senkrechten Seitenflächen (1, 2) zueinander parallel sind und die Eintrittseite und die Austrittseite der Strahlung bilden.

3. Anzeiger nach Anspruch 2, dadurch gekennzeichnet, dass der Träger (7) Klemmittel (12) aufweist, um die prismatischen Stücke (5, 6) gegeneinander zu halten.

4. Anzeiger nach Anspruch 1, dadurch gekennzeichnet, dass die Stücke (13 bis 23) mit variabler Dicke Sektoren sind, die annähernd Pyramidenform haben und Seite an Seite auf einem kreisförmigen Träger (44) angeordnet sind, dessen eine Seite (45) die Form eines kreisförmigen Kegelstumpfes hat, wobei die von dieser kegelstumpfförmigen Seite getragene Seite der Stücke (13 bis 23) eine konische Fläche mit identischen oder nahezu identischen Eigenschaften ist, und wobei die Seitenflächen (24, 25... 42, 43) aneinandergrenzender Sektorstücke durch Klemmittel (56) miteinander in Kontakt gehalten werden.

5. Anzeiger nach Anspruch 4, dadurch gekennzeichnet, dass der kreisförmige Träger (44) einen Randanschlag (49) besitzt, der mit der kegelstumpfförmigen Seite (45) eine Aufnahme bildet, in der die Sektorstücke (13 bis 23) gehalten sind.

6. Anzeiger nach Anspruch 5, dadurch gekennzeichnet, dass ein freigebliebener Teil (55) der Aufnahme ein radiales Klemmorgan (56) für die Sektorstücke (13 bis 23) aufnimmt.

7. Anzeiger nach Anspruch 6, dadurch gekennzeichnet, dass das radiale Klemmorgan (56) eine Schraube (57) umfasst, die mit einer den Randanschlag (49) des Trägers (44) radial durchdringendes Gewindebohrung (58) zusammenwirkt, um eine in dem freigebliebenen Teil (55) der Aufnahme vorgesehene Rolle (59) gegen die freien Seitenflächen (60, 61) des ersten und letzten Sektorstücks (13, 23) zu drücken.

8. Anzeiger nach Anspruch 7, dadurch gekennzeichnet, dass ein dem radialen Klemmorgan (56) diametral gegenüberliegendes Sektorstück (18) in Richtung seiner durch das Klemmorgan (56) verlaufenden Achse Langlöcher (63, 64) aufweist, die mit in dem Träger (44) befestigten Stiften (65, 66) zusammenwirken.

**Claims**

1. Sensitivity indicator for the detection of faults by X-ray radiological inspection, consisting of at least two similar parts (5, 6; 13 to 23) comprising sections of variable thickness, fixed to a support (7; 44) of complementary thickness, varying in the reverse direction in such a way that their upper and lower surfaces (1, 2) are parallel to each other, characterized in that the two parts (5, 6; 13 to 23) are disposed side by side and their adjacent and parallel lateral sides (3, 4; 24, 25... 42, 43) in contact with each other form a fault extending in a plane hereafter denoted by the term plane fault (D), the said lateral sides (3, 4; 24, 25... 42, 43) being perpendicular to the upper surfaces (1) of the parts (5, 6; 13 to 23) and lower surface (2) of the support (7; 44) which are themselves opposite the surfaces in contact (8, 9; 45, 46), of the parts (5, 6; 13 to 23) and of the support (7; 44), the radiation penetrating the indicator in a direction perpendicular to the upper surface (1) of the parts (5, 6; 13 to 23).

2. Indicator according to Claim 1, characterized in that the parts (5, 6) of variable thickness are right prisms housed side by side at least partially in a housing (11) in the support (7), of complementary shape, in which two (3, 4) of their adjacent lateral sides form the plane fault (D), the surfaces (1, 2) perpendicular to the bases of the prismatic parts (5, 6) and of the prismatic housing (11) of the support (7) are parallel to each other and form the inlet and outlet surfaces of the radiation.

3. Indicator according to Claim 2, characterized in that the support (7) comprises means of clamping (12) to hold the prismatic parts (5, 6) against each other.

4. Indicator according to Claim 1, characterized in that the parts (13 to 23) of variable thickness are approximately pyramid-shaped sectors disposed side by side on a circular support (44) of which one surface (45) is in the form of a truncated circular cone, the surface of the parts (13 to 23), supported by the truncated cone surface being a conical surface of identical or nearidentical characteristics, the lateral surfaces (24, 25–42, 43) of the adjacent sector parts being held in contact by means of clamping (56).

5. Indicator according to Claim 4, characterized in that the circular support (44) comprises a rim (49) forming with the truncated conical surface (45) a housing in which the sector parts (13 to 23) are held.

6. Indicator according to Claim 5, characterized in that a section of the housing ramaining free (55) receives a radial clamping device (56) for the sector parts (13 to 23).

7. Indicator according to Claim 6, characterized in that the radial clamping device (56) comprises a screw (57) working in conjunction with a threaded hole (58) passing radially through the rim (49) of the support (44) in order to push a roller (59), provided in the section of housing remaining free (55), against the free lateral surfaces (60, 61) of the first and last sector parts (13, 23).

8. Indicator according to Claim 7, characterized in that one sector part (18) diametrically opposite the radial clamping device (56) comprises, along its axis passing through the clamping device (56), small slots (63, 64) working in conjunction with pins (65, 66) fixed in the support (44).

FIG.:1

FIG.:2

FIG.:3

FIG.:4

53  48  13  47  46  54  1  51

49

52

45  2  44  50

FIG.:5

49  59  55  51

57  56  58  62  44  45

FIG.:6

51  63  64  53

65  44  66

EP 0 186 563 B1

9

2_2